# EUROPÄISCHE PATENTSCHRIFT

(11) **EP 3 768 532 B1**
(45) Veröffentlichungstag und Bekanntmachung des Hinweises auf die Patenterteilung: **01.09.2021**
(21) Anmeldenummer: 19712954.7
(22) Anmeldetag: 19.03.2019
(51) Int. Cl.: B62D 53/12, B60D 1/01, B60D 1/64

(54) **SYSTEM UND VERFAHREN ZUM VERSCHWENKEN EINER KOPPLUNGSKOMPONENTE**
SYSTEM AND METHOD FOR PIVOTING A COUPLING COMPONENT
SYSTÈME ET PROCÉDÉ POUR FAIRE PIVOTER UN COMPOSANT D'ACCOUPLEMENT

(30) Priorität: 21.03.2018 DE 102018106676
(43) Veröffentlichungstag der Anmeldung: 27.01.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2019/056790
(87) Internationale Veröffentlichungsnummer: WO 2019/179991

(56) Entgegenhaltungen:
- WO-A1-2008/038313
- DE-U1- 29 616 253
- US-A- 4 183 599
- US-A1- 2012 319 379
- US-B1- 6 182 995

## Beschreibung

Die vorliegende Erfindung betrifft ein System und ein Verfahren zum Verschwenken einer Kopplungskomponente.

Das Anbinden eines Sattelaufliegers an eine Sattelzugmaschine ist aus dem Stand der Technik hinlänglich bekannt. Hierzu verfügt der Sattelauflieger typischerweise über ein Zapfenelement, insbesondere einen Königszapfen, der in einem gekoppelten Zustand in eine entsprechende Sattelkupplung, oder auch Kupplungsplatte mit Kupplungshaken, an der Sattelzugmaschine eingreift. Neben dem mechanischen Anbinden des Sattelaufliegers an die Sattelzugmaschine gehört zum erfolgreichen Ankoppeln des Sattelaufliegers an die Sattelzugmaschine auch das Verbinden von sattelzugmaschinenseitigen und aufliegerseitigen Leitungen, wie z. B. Luftdruckleitungen und elektrische Leitungen, die zur Versorgung der Lichtanlage oder anderer Elektronik erforderlich sind. Zur Führung der Leitungen ist vorzugsweise eine Kopplungskomponente vorgesehen, in oder an der die Leitungen in einen für die gewünschte Verbindung vorgesehenen Schnittstellenbereich geführt werden. Diese Kopplungskomponente ist vorzugsweise schwenkbar gelagert, um die Leitungen für die Kopplung einfach ausrichten zu können, wenn die Sattelzugmaschine und der Sattelauflieger beispielsweise beim Koppeln schräg, d. h. nicht fluchtend, zueinander ausgerichtet sind. Hierbei hat sich die Verwendung einer Drehvorrichtung, insbesondere in Form eines Satteldrehplateaus, etabliert.

Um zu verhindern, dass die Leitungen unkontrolliert bereichsweise gestaucht und ausgebogen werden, wodurch sie ggf. dem Ankoppeln zwischen der Sattelzugmaschine und dem Sattelauflieger im Weg stehen, ist es üblich, die Leitung unabhängig von der Ausrichtung der Kopplungskomponente unter Spannung zu halten. Hierzu werden beispielsweise Schwenkarme und/oder Kabeltrommeln verwendet. Aus der DE 10 2004 0449 92 B4 ist ein Kabelspeicher an einer Unterseite des Sattelaufliegers bekannt.

Aus der DE 10 2006 033 900 B3 ist eine Leitungsabführung für einen Auflieger eines Sattelzuges bekannt, wobei eine Rahmenkonstruktion mit einer auf der Unterseite abschließenden Aufliegerplatte, an welcher der Königszapfen angeordnet ist, vorgesehen ist. Zur Führung der Leitungen sind dabei Spannarme an ihrem äußersten Ende schwenkbar um eine vertikale Achse an der Rahmenkonstruktion angebracht.

Aus der US 2012 0319379 ist es bekannt, dass sich eine Schlaufe in einem festgelegten Bereich ausbildet, wobei sich die Schlaufe beim Verschwenken verkleinert.

Die WO 2008/038313 offenbart eine elektro-pneumatischen Kupplungsgruppe für einen Sattelzug bestehend aus einer Sattelzugmaschine und einem Sattelauflieger. Die Sattelzugmaschine ist mit einer Sattelkupplung ausgestattet, die eine radialen Schlitz für die Kupplung an den Sattelauflieger hat. Der Sattelauflieger hat einen Zapfen, der dazu geeignet ist, in die Sattelkupplung durch den radialen Schlitz eingeführt zu werden. Die Gruppe besteht aus einem elektro-pneumatischen Überträger, der dafür geeignet ist, in dem radialen Schlitz der Sattelkupplung platziert zu werden, um zumindest eine elektrische und/oder pneumatische in der Nähe des Zapfens von der Sattelzugmaschine kommende Leitung zu tragen, und einem elektro-pneumatischen Verteiler, der dafür geeignet ist, die zumindest eine elektrische und/oder pneumatische Leitung zu empfangen und innerhalb des Sattelaufliegers verfügbar zu machen. Der Verteiler ist ringförmig und geeignet, starr an dem Überträger fixiert und drehbar um den Zapfen montiert zu werden.

Ausgehend von diesem Hintergrund macht es sich die vorliegende Erfindung zur Aufgabe, ein verbessertes System zum Verschwenken der Kopplungskomponente bereitzustellen, bei dem auf möglichst einfache Weise die Möglichkeit zur Kompensation der das Verschwenken der Kopplungskomponente begleitenden Längenänderung der Leitung realisierbar ist, ohne unzulässig in den Bauraum eines Aufliegers oberhalb eines Zapfenelements einzugreifen.

Diese Aufgabe wird gelöst durch ein System gemäß Anspruch 1 und ein Verfahren gemäß Anspruch 12. Weitere Vorteile und Merkmale der Erfindung ergeben sich aus den Unteransprüchen sowie der Beschreibung und den beigefügten Figuren. Erfindungsgemäß ist ein System zum Verschwenken einer Kopplungskomponente insbesondere eines Auslegers, für eine Kopplung zwischen einem Sattelzug und einem Sattelauflieger, vorgesehen, umfassend eine Drehvorrichtung, mittels der die Kopplungskomponente zwischen einer Primärlage und einer Sekundärlage verschwenkbar ist, und mindestens eine Leitung, die über die Drehvorrichtung in die Kopplungskomponente geführt wird, wobei das System derart konfiguriert ist, dass die Leitung in der Primärlage in einem festgelegten Bereich bzw. Abschnitt eine Schlaufe ausbildet, und die Schlaufe beim Verschwenken in die Sekundärlage verkleinert wird. Im Gegensatz zum Stand der Technik wird mit Vorteil auf komplizierte Mechanismen zur Längenänderung oder zur Aufrechthaltung der Spannung in der Leitung, wie z. B. auf eine Kabeltrommel oder einen Schwenkarm, verzichtet. Stattdessen ist das System dazu ausgelegt, dass sich gezielt eine oder mehrere Schlaufen in einem festgelegten Bereich oder in mehreren festgelegten Bereichen für die Leitung ausbilden. Insbesondere ist es vorgesehen, dass sich die Schlaufe gezielt in einem dafür vorgesehenen Abschnitt bzw. Bereich ausbildet. Zur Festlegung des Bereichs bzw. Abschnitts mit der Schlaufe ist die Leitung beispielsweise entlang ihrer Führung zumindest an einem Fixpunkt, vorzugsweise an mehreren Fixpunkten, zwischen denen sich die Schlaufe ausbildet, fixiert und/oder die Leitung wird entsprechend geführt, so dass sie in der Primärlage eine Schlaufe in einem festgelegten Bereich ausbildet. Vorzugsweise grenzt die Schlaufe an den Fixpunkt oder ein entsprechendes Führungselement an. Dadurch wird mit Vorteil vermieden, dass sich bei der Überführung der Kopplungskomponente die Leitung an einer Stelle staucht bzw. zur Schlaufe ausbildet, in der sie beispielsweise den Kopplungsmechanismus zwischen der Sattelzugmaschine und dem Sattelauflieger behindern würde. Vorzugsweise ist eine Längsachse der Kopplungskomponente in der Primärlage parallel zu einer Mittelachse bzw. Längsrichtung des Sattelaufliegers ausgerichtet und in der Sekundärlage gegenüber dieser Mittelachse verdreht, beispielsweise um einen Winkel bis zu 90° oder sogar um bis zu 120°. Weiterhin ist es bevorzugt vorgesehen, dass die Kopplungskomponente an einer der Fahrbahn zugewandten Unterseite der Drehvorrichtung angeordnet ist. Beispielsweise ist die Drehvorrichtung dabei in einen Fahrzeugrahmen, vorzugsweise in eine Bodenplatte des Fahrzeugrahmens, eingelassen. Insbesondere umfasst die Drehvorrichtung einen Drehteller, der drehbar um ein Zapfenelement, insbesondere einen Königszapfen, gelagert ist. Über das Zapfenelement wird der Sattelauflieger wiederum an eine entsprechende Sattelkupplung der Sattelzugmaschine angekoppelt. Um zu verhindern, dass die Kopplungskomponente beim Ankoppeln zwischen die Sattelkupplung des Sattelzugmaschine und das Zapfenelement gerät und dadurch das Ankoppeln verhindert, ist es vorgesehen, dass, insbesondere in der Primärlage, das Kopplungselement in Fahrrichtung (vorwärts) gesehen hinter dem Zapfenelement angeordnet ist bzw. bleibt. Weiterhin ist es vorgesehen, dass die Leitung in der Kopplungskomponente in eine Steckerkonsole bzw. -buchse mündet, die vorzugsweise auf das Zapfenelement, insbesondere in der Primär- und der Sekundärlage, ausgerichtet ist. Weiterhin ist es vorstellbar, dass mehrere Leitungen gebündelt sind und im festgelegten Bereich gemeinsam eine Schlaufe bilden.

Vorzugsweise ist die Leitung, insbesondere in ihrer Länge, derart dimensioniert, dass sie ohne zu überspannen führbar ist bzw. geführt wird, wenn eine vorgesehene maximale Auslenkung in der Sekundärlage eingenommen wird. Beispielsweise ist die Leitung bei einer maximalen Auslenkung der Sekundärlage spannungsfrei angeordnet. Zweckmäßigerweise hängt somit eine Größe der Schlaufe in der Primärlage ab von einer maximal möglichen Verschwenkung der Kopplungskomponente in der Sekundärlage. Beispielsweise ist die Kopplungskomponente in der maximal möglichen Sekundärlage um 90° oder sogar um 120° um die Primärlage verdreht. Durch die entsprechende Dimensionierung kann mit Vorteil für die Leitung sichergestellt werden, dass selbst bei extremer Verdrehung der Kopplungskomponente mit der Drehvorrichtung die Leitung spannungsfrei bleibt. Damit wird die Beanspruchung der Leitung im Betrieb auf Dauer reduziert, wodurch schließlich die Lebensdauer der Leitung in vorteilhafter Weise verlängert wird.

Erfindungsgemäß greift die Leitung durch eine Öffnung in der Drehvorrichtung hindurch. Damit lässt sich die Leitung teilweise oberhalb der Drehvorrichtung und teilweise unterhalb der Drehvorrichtung führen, d. h. ein erster Teil der Leitung wird oberhalb der Drehvorrichtung und ein zweiter Teil der Leitung wird unterhalb der Drehvorrichtung geführt. Dadurch lässt sich der erste Teil der Leitung so anordnen, dass er das Ankoppeln des Sattelaufliegers an die Sattelzugmaschine nicht behindern kann. Dabei ist die Öffnung beispielswiese in einem Drehteller der Drehvorrichtung beabstandet zum Zapfenelement realisiert, d. h. die Öffnung dreht sich bei der Überführung der Kopplungskomponente zwischen der Primärlage und der Sekundärlage mit dem Drehteller bzw. der Drehvorrichtung mit.

Erfindungsgemäß umfasst die Drehvorrichtung eine Kabelführung und/oder einen Kabelkanal zur Führung der Leitung. Die Kabelführung und/oder der Kabelkanal lässt sich mit Vorteil so dimensionieren bzw. ausgestalten, dass eine Ausbildung der Schlaufe in einem festgelegten Bereich zumindest unterstützt wird. Vorzugsweise liegt die Leitung an einem gebogenen Teilbereich der Kabelführung, zumindest in der Sekundärlage, an. Mittels eines Kabelkanals lassen sich die Leitungen zudem auf einfache Weise vor äußeren Einflüssen schützen.

Erfindungsgemäß bildet
- ein von der Drehvorrichtung abstehendes Kragenelement, insbesondere auf einer der Drehachse zugewandten Seite, und vorzugsweise
- ein Gehäuse oberhalb der Drehvorrichtung
einen Teil der Kabelführung und/oder des Kabelkanals. Insbesondere verläuft das Kragenelement konzentrisch zur Drehachse, um die der Drehteller zur Überführung der Kopplungskomponente zwischen der Primärlage und der Sekundärlage verdrehbar ist, bzw. zum Zapfenelement. Dabei steht das Kragenelement in einer parallel zur Drehachse verlaufenden Richtung vom Drehteller ab und ist drehfest mit dem Drehteller verbunden. So wird das Kragenelement bei der Überführung zwischen der Primärlage und der Sekundärlage mitverschwenkt. Weiterhin ist es vorgesehen, dass das Kragenelement das Zapfenelement zu mehr als 180° in einer senkrecht zur Drehachse verlaufenden Ebene umläuft bzw. umschließt. Dadurch ist es mit Vorteil möglich, einen Teil der Leitungen im Uhrzeigersinn und einen Teil der Leitungen gegen den Uhrzeigersinn um das Zapfenelement zu führen. Sofern ein Gehäuse vorgesehen ist, umgreift dieses das Kragenelement, so dass eine der Drehachse abgewandte Seite des Kragenelements und eine der Drehachse zugewandte Seite des Gehäuses eine Breite des Kabelkanals festlegen. Dabei ist das Gehäuse vorzugsweise positionsfest gestaltet bzw. an den Fahrzeugrahmen angebunden, d. h. das Gehäuse dreht sich bei einem Verdrehen des Drehtellers bei der Überführung zwischen der Primärlage und der Sekundärlage nicht mit. Weiterhin ist es vorgesehen, dass die Breite des Kabelkanals größer, insbesondere 1,5 bis 5 - mal so groß ist wie ein Durchmesser der Leitung bzw. der gebündelten Leitungen.

Erfindungsgemäß ist es vorgesehen, dass das Kragenelement an einer der Öffnung zugewandten Seite unterbrochen ist oder eine Einbuchtung aufweist. Denkbar ist auch, den Kragen zumindest bereichsweise kleiner zu dimensionieren.

Vorzugsweise ist es vorgesehen, dass der Kabelkanal oder die Kabelführung mit einem Füllmaterial gefüllt ist, das die Leitungen im Kabelkanal bzw. der Kabelführung in Position hält und dennoch eine Verlagerung gestattet. Beispielsweise ist das Füllmaterial derart elastisch ausgelegt, dass sich die vom Füllmaterial umgebenen Leitungen verschieben können, aber mittels des Füllmaterials in eine bevorzugte Orientierung zurückgeführt werden können, wenn keine Drehung in der Drehvorrichtung vorliegt. Vorzugsweise ist der Kabelkanal bzw. die Kabelführung teilweise gefüllt. Insbesondere ist es vorstellbar, dass der Bereich, in dem im Bedarfsfall die Schleife ausgebildet wird, in einem füllmaterialfreien Bereich des Kabelkanals bzw. der Kabelführung angeordnet ist.

Weiterhin ist es vorstellbar, dass im Bereich, in dem die Schlaufe ausgebildet wird, ein Sensor bzw. ein Detektionsmittel, z. B. eine Kamera ausgebildet ist. Mit diesem Sensor ist es in vorteilhafter Weise möglich den aktuellen Zustand der Schlaufe, d. h. dessen Größe zu erfassen. Infolgedessen lässt sich die Größe der Schlaufe heranziehen, um die aktuelle Ausrichtung der Drehvorrichtung und somit die aktuelle Ausrichtung der Zugmaschine und des Sattelaufliegers zu bestimmen. Diese Information kann beispielsweise an eine Steuereinrichtung und/oder Bedienkonsole weitergeleitet werden, um den Fahrer über die aktuelle Ausrichtung der Zugmaschine und des Sattelaufliegers zu informieren.

Es ist auch vorstellbar, dass der Kabelkanal im Bereich der Schleife mindestens eine Öffnung aufweist. Beispielsweise lässt diese Öffnung es zu, dass die Schleife für bestimmte Stellung der Drehvorrichtung aus dem Kabelkanal herausgedrückt werden kann. Die Öffnung gestattet zudem einen einfachen Zugriff auf die Leitungen in einem beanspruchten Bereich, nämlich in dem Bereich, in dem die Schleife immer wieder ausgeformt wird. Dies erleichtert Wartungs- und Reparaturarbeiten.

Es ist weiterhin denkbar, dass der Kabelkanal bzw. die Kabelführung zumindest an einer Stelle derart verjüngt bzw. dimensioniert ist, dass die Leitungen im Kabelkanal verpresst sind, d. h. reibschlüssig mit dem Kabelkanal verbunden sind. Dadurch lassen sich die Leitungen dauerhaft, d. h. unabhängig von der Ausrichtung der Drehvorrichtung fixieren. Dadurch lässt sich die Position für die Schleife beispielsweise festlegen, insbesondere in einem Bereich, der außerhalb der Stelle, an der der Kabelkanal reibschlüssig die Leitungen verpresst.

Weiterhin ist es vorstellbar, dass sich die Schleife im Betrieb in einer parallel zur Bodenplatte verlaufenden Ebene ausformt. Alternativ ist es auch vorstellbar, dass sich die Schleife in einer schräg oder vorzugsweise im Wesentlichen senkrecht zur Bodenplatte verlaufenden Ebene ausformt. Dadurch lässt sich beispielsweise die Lage der Schleife an die bauraumbedingten Gegebenheiten anpassen.

Weiterhin ist es vorgesehen, dass ein Verhältnis zwischen einem unterbrochenen Bogenbereich zu einem gedachten Gesamtumfang eines geschlossenen Kragenelements einen Wert zwischen 0,1 und 0,4, bevorzugt zwischen 0,15 und 0,35 und besonders bevorzugt zwischen 0,22 und 0,28 annimmt.

Insbesondere ist das System derart konfiguriert, dass sich die Schlaufe oberhalb der Drehvorrichtung, insbesondere in Richtung der Drehachse gesehen auf Höhe der Kabelführung oder des Kabelkanals, ausbildet, wobei sich vorzugsweise die Schlaufe im Kabelkanal und/oder außerhalb des Kabelkanals ausbildet. Durch die Ausbildung der Schlaufe oberhalb der Drehvorrichtung wird mit Vorteil verhindert, dass sich unterhalb der Drehvorrichtung, d. h. in dem Bereich, in dem die mechanische Ankopplung erfolgt, eine Schlaufe bildet, die dann das Ankoppeln behindert. Außerdem sind die Maßnahmen zur Schlaufenbildung dadurch geschützt oberhalb der Drehvorrichtung angeordnet, d. h. nicht auf der freiliegenden Unterseite des Sattelaufliegers. Der zweite Teil der Leitungen unterhalb der Drehvorrichtung erfährt dabei vorzugsweise keine Beanspruchung und behält unabhängig von der Primärlage oder der Sekundärlage die gleiche Länge. Mit Vorteil wird somit auf der Unterseite des Sattelaufliegers auf zusätzliche Vorrichtungen zur Leitungsspeicherung verzichtet.

Zweckmäßigerweise nimmt ein Verhältnis eines Abstands der Öffnung zur Drehachse zu einem Abstand der Kabelführung zur Drehachse einen Wert zwischen 0,75 und 1,15, bevorzugt zwischen 0,8 und 1 und besonders bevorzugt zwischen 0,88 und 0,98 an. Gegenüber der Kabelführung, insbesondere dem Kragenelement, ist bezogen auf die Drehachse die Öffnung in radialer Richtung zur Achse hin versetzt. Dadurch wird am Ende der Kabelführung eine Knickkante bereitgestellt, an der die Leitung, zumindest für eine maximale Auslenkung in der Sekundärlage, einen kleineren Krümmungsradius aufweist als der Krümmungsradius des Kragenelements. Ein weiterer Vorteil einer drehachsennahen Anordnung der Öffnung ist die Kompaktheit des Systems. Vorzugsweise bildet sich die Schlaufe im Bereich zwischen dem der Öffnung zugewandten Ende der Kabelführung und der Öffnung.

Vorzugsweise ist in der Öffnung oder in einem an die Öffnung angrenzenden Bereich ein Klemmbereich zum Fixieren der Leitung und/oder eine Struktur zum Führen der Leitung vorgesehen. Durch die Fixierung in oder im Bereich der Öffnung wird mit Vorteil verhindert, dass die Leitung durch die Öffnung hindurchgedrückt wird und an der Unterseite des Sattelaufliegers eine Schlaufe ausbildet. Vorzugsweise ist die Leitung verklemmt. Beispielsweise ist die Struktur zum Führen der Leitung und/oder der Leitungen rillenförmig ausgestaltet und beispielsweise einzelne Leitungen werden in den jeweiligen Rillen geführt.

Zweckmäßigerweise ist die Öffnung in einer parallel zur Drehachse verlaufenden Richtung oberhalb der Kopplungskomponente angeordnet. Dadurch kann die Leitung unmittelbar in die Kopplungskomponente geleitet werden, ohne dass sie ungeschützt freiliegend an der Unterseite der Drehvorrichtung verlaufen muss. Vorzugsweise ist die Öffnung kleiner als die Ausdehnung der Kopplungskomponente unterhalb der Öffnung, so dass die Öffnung auf der der Fahrbahn zugewandten Seite bedeckt ist, insbesondere vollständig bedeckt ist. Alternativ ist es vorstellbar, dass die Öffnung nur partiell von der Kopplungskomponente bedeckt ist. Vorzugsweise ist die Öffnung in Fahrtrichtung, zumindest in der Primärlage, hinter einem Zapfenelement angeordnet. Dadurch kann mit der Position sichergestellt werden, dass die Leitungen nicht zwischen das Zapfenelement und die Sattelkupplung beim Ankoppeln geraten können.

Vorzugsweise nimmt ein Verhältnis zwischen einer bezogen auf die Drehachse in radialer Richtung bemessenen Breite des Kabelkanals zu einem Abstand der Kabelführung einen Wert zwischen 0,15 und 0,35, bevorzugt zwischen 0,18 und 0,28 und besonders bevorzugt zwischen 0,22 und 0,27 an. Mittels der Breite des Kabelkanals lässt sich ein Freiraum festlegen, der zur Schlaufenbildung genutzt werden kann. Beispielsweise ist es vorstellbar, dass der Kabelkanal derart schmal dimensioniert ist, dass sich am Eingang bzw. Ausgang des Kabelkanals die Schlaufe bildet, da die Leitung bei ihrer Stauchung in der Primärlage wegen der Begrenzung durch den Kabelkanal nicht weiter radial nach außen gedrückt werden kann. Es ist auch vorstellbar, dass die Breite des Kabelkanals derart dimensioniert ist, dass sich die Schlaufe innerhalb des Kabelkanals ausbildet. Insbesondere lassen sich die Leitungen mittels des Kabelkanals bzw. der Kabelführung um das Zapfenelement führen, wobei die Leitungen insbesondere an dem Kabelkanal bogenförmig anliegen. Die Schlaufe wird dabei bevorzugt außerhalb des Kabelkanals ausgebildet. Beispielweise ist der Kabelkanal, insbesondere der bogenförmige Kabelkanal derart gestaltet, dass er einen ersten Ausgang und einen zweiten Ausgang aufweist und die Leitungen beim Verschwenken in den ersten Ausgang hineingezogen werden und aus dem zweiten Ausgang herausgedrückt werden oder andersrum.

Zweckmäßigerweise ist es vorgesehen, dass die Drehvorrichtung ein Federelement für eine automatische Rückkehr in die Primärlage aufweist. Dabei ist es vorzugsweise vorgesehen, dass das Federelement beim Überführen in die Sekundärlage vorgespannt wird. Beispielsweise handelt es sich um eine Torsionsfeder, Druckfeder und/oder eine Zugfeder. Vorzugsweise wird mittels des Federelements die Drehvorrichtung, insbesondere der Drehteller, gegen das ortsfeste Gehäuse und/oder einen Fahrzeugrahmen in der Sekundärlage vorgespannt. In der Primärlage ist das Federelement vorzugsweise ungespannt. Dadurch lässt sich mit Vorteil sicherstellen, dass die Kopplungskomponente in die Primärlage zurückkehrt, wenn keine zusätzlichen äußeren Kräfte auf die Kopplungskomponente wirken.

Ein weiterer Gegenstand der vorliegenden Erfindung ist ein Verfahren zum Verschwenken einer Kopplungskomponente, insbesondere eines Auslegers, für ein Kopplung zwischen einer Sattelzugmaschine und einem Sattelauflieger, wobei eine Drehvorrichtung, mittels der die Kopplungskomponente zwischen einer Primärlage und einer Sekundärlage verschwenkbar ist, und mindestens eine Leitung, die über die Drehvorrichtung in die Kopplungskomponente geführt wird, vorgesehen sind, wobei die Leitung in der Primärlage in einem festgelegten Bereich eine Schlaufe ausbildet, und die Schlaufe beim Verschwenken in die Sekundärlage verkleinert wird. Insbesondere wird die Schlaufe bei der Rückkehr in die Primärlage verkleinert und bei der Auslenkung in die Sekundärlage. Bevorzugt ist es vorgesehen, dass am ersten Ausgang und am zweiten Ausgang jeweils eine Schlaufe ausgebildet wird. Beim Verschwenken entlang einer ersten Richtung aus der Primärlage wird die Schlaufe am ersten Ausgang größer, während die Schlaufe am zweiten Ausgang kleiner wird. Beim Verschenken aus der Primärlage entlang einer der ersten Richtung entgegengesetzten zweiten Richtung wird die Schlaufe am ersten Ausgang kleiner und am zweiten Ausgang größer. Alle für das erfindungsgemäße System beschriebenen Merkmale und deren Vorteile lassen sich sinngemäß ebenfalls auf das erfindungsgemäße Verfahren übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden. Es zeigen
- Fig. 1:: ein System zum Verschwenken einer Kopplungskomponente für eine Kopplung zwischen einem Sattelzug und einem Sattelauflieger gemäß einer bevorzugten Ausführungsform in einer perspektivischen Ansicht,
- Fig. 2:: System aus Figur 1 in einer Seitenansicht und einer Draufsicht,
- Fig. 3: System aus den Figuren 1 und 2 zusammen mit einer sattelzugseitigen Sattelkupplung ohne Zapfenverkleidung und ohne Außenverkleidung,
- Fig. 4: System aus den Figuren 1 und 2 zusammen mit einer sattelzugseitigen Sattelkupplung ohne Außenverkleidung und
- Fig. 5: System aus den Figuren 1 und 2 zusammen mit einer sattelzugseitigen Sattelkupplung.

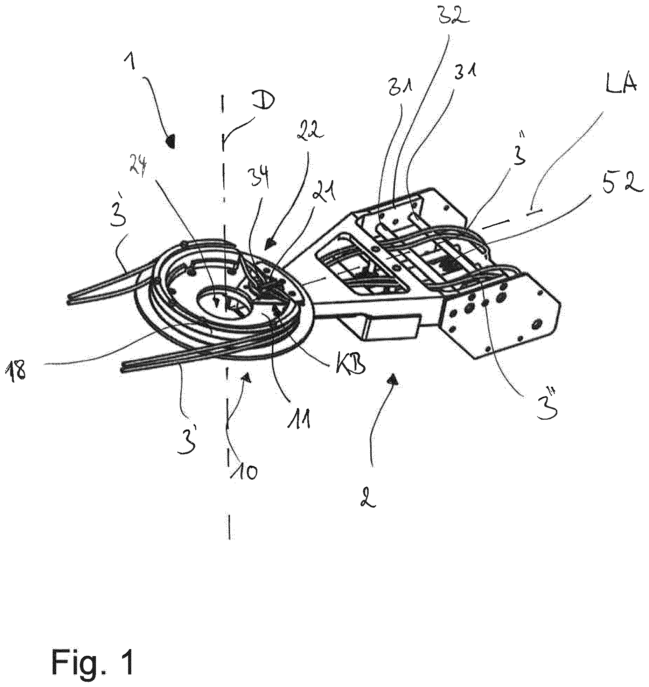

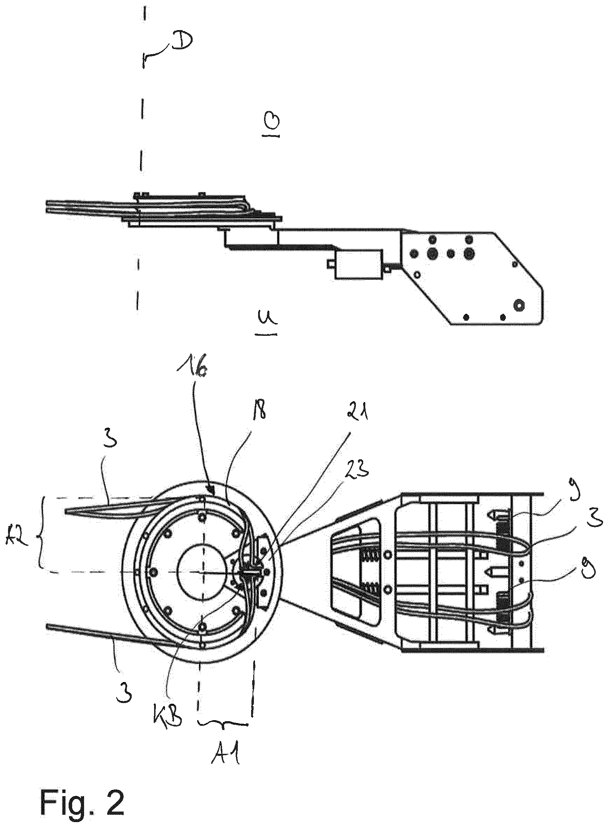

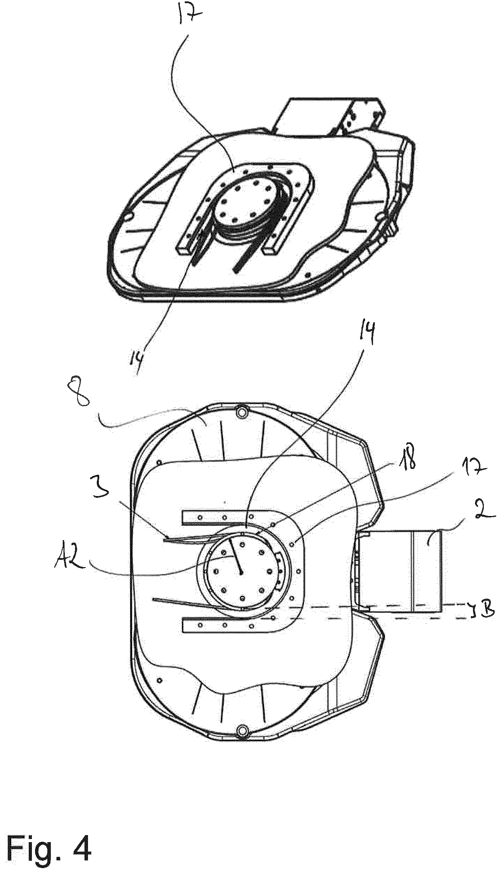

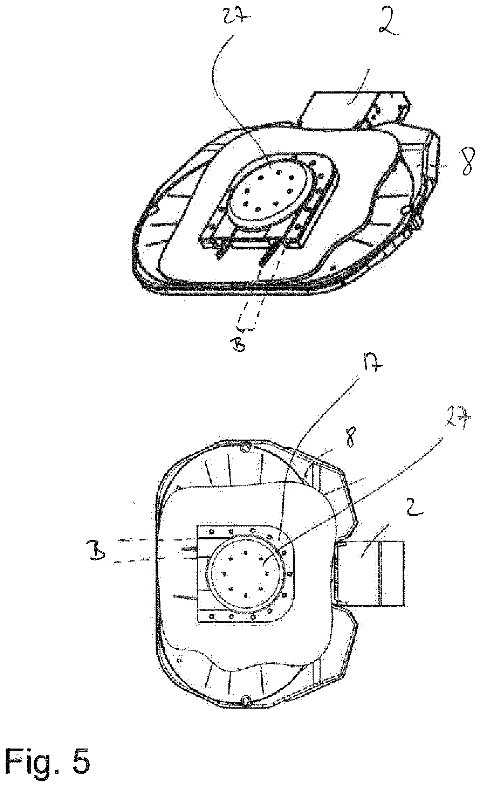

In den Figuren 1 bis 5 ist ein System 1 zum Verschwenken einer Kopplungskomponente 2 gemäß einer bevorzugten Ausführungsform der vorliegenden Erfindung dargestellt. Die Kopplungskomponente 2, insbesondere ein Ausleger, wird dabei beim Koppeln zwischen einer Sattelzugmaschine und einem Sattelauflieger in einem Schnittstellenbereich verwendet. Unter einem Schnittstellenbereich zwischen der Sattelzugmaschine und dem Sattelauflieger ist insbesondere der Bereich zu verstehen, in dem der Sattelauflieger an die Sattelzugmaschine angebunden wird, vorzugsweise automatisch angebunden wird. Beispielsweise erfolgt die Anbindung des Sattelaufliegers an die Sattelzugmaschine über ein aufliegerseitiges Zapfenelement (hier nicht dargestellt), bevorzugt einen Königszapfen, der im angekoppelten Zustand in eine sattelzugseitige Sattelkupplung 8 eingreift. Neben der mechanischen Kupplung ist es auch erforderlich, dass aufliegerseitige und sattelzugseitige Leitungen 3 bzw. Versorgungsleitungen, wie z. B. eine Gasdruckleitung 5 bzw. Luftdruckleitung oder eine elektrische Leitung, über einen entsprechenden Steck- bzw. Anschlussmechanismus im Schnittstellenbereich miteinander verbunden werden können. Die Kopplungskomponente 2 dient hierbei zur Führung der Leitungen 3 sowie zum Ausrichten der Leitungen beim Ankoppeln. Hierzu sind die Leitungen 3 innenliegend oder außenliegend an die Kopplungskomponente 2 angebunden und die Kopplungskomponente 2 verfügt beispielsweise über eine Steckerbuchse oder -konsole 52, in die die aufliegerseitigen Leitungen 3 münden. Insbesondere ist die Steckerkonsole 52 auf das Zapfenelement gerichtet. Mittels der Steckerbuchse bzw. -konsole 52 erfolgt das Verbinden der Leitungen 3 mit einer komplementär ausgestalteten weiteren Steckerbuchse bzw. -konsole der Sattelzugmaschine. Die Kopplungskomponente 2 ist dabei im Wesentlichen gabelförmig ausgestaltet und weist beispielsweise Längsstreben 32 und/oder Querstreben 31 auf, die zur Stabilisierung der Kopplungskomponente 2 dienen und an denen die Leitungen 3 geführt und montiert werden können. In dem dargestellten Ausführungsbeispiel sind die Steckerbuchse oder -konsole 31 an einem dem Zapfenelement abgewandten Ende angeordnet und dabei auf das Zapfenelement gerichtet.

Zur Ausrichtung der Kopplungskomponente 2, insbesondere beim Ankoppeln des Sattelaufliegers an den Sattelzug, ist es vorgesehen, dass die Kopplungskomponente 2 zwischen einer Primärlage und einer Sekundärlage verschwenkbar ist, vorzugsweise relativ zum Zapfenelement verschwenkbar ist. Die Primärlage entspricht dabei vorzugsweise einer Ruhelage, in der eine Längsachse LA der Kopplungskomponente 2 im Wesentlichen parallel zu einer Mittelachse des Sattelaufliegers verläuft. In der Sekundärlage ist die Längsachse LA der Kopplungskomponente 2 vorzugsweise bis zu 90° oder sogar bis zu 120° geneigt gegenüber der Mittelachse.

Zum Verschwenken zwischen der Primärlage und der Sekundärlage ist insbesondere eine Drehvorrichtung 10 vorgesehen, mit der die Kopplungskomponente 2 drehfest verbunden ist. Die Drehvorrichtung 10 umfasst dabei vorzugsweise einen Drehteller 11, der in einen Fahrzeugrahmen, beispielsweise eine Bodenplatte 5 des Sattelaufliegers, eingelassen ist. Die Kopplungskomponente 2 ist dabei drehfest mit dem Drehteller 11 verbunden und lässt sich so mit einer Drehung des Drehtellers gegenüber der Bodenplatte 5 verschwenken. Dabei ist die Kopplungskomponente 2 im montierten Zustand an einer Unterseite der Drehvorrichtung 10 angebunden. Dabei ist es insbesondere vorgesehen, dass eine Drehachse D, um die der Drehteller 11 verdrehbar ist, mittig durch das Zapfenelement verläuft bzw. ein Außenumfang des Zapfenelements im Wesentlichen konzentrisch zur Drehachse D verläuft. Dabei ist es vorstellbar, dass das Zapfenelement drehfest zum Drehteller 11 oder zum Fahrzeugrahmen bzw. der Bodenplatte 5 ausgestaltet ist, d. h. bei einer Schwenkbewegung der Kopplungskomponente dreht sich das Zapfenelement mit oder es dreht sich nicht mit. In dem in Figur 1 dargestellten Beispiel umfasst der Drehteller 11 mittig eine runde Aussparung 24, durch die im montierten Zustand das Zapfenelement durchgreift, und um die der Drehteller 11 verschwenkbar gelagert ist.

Weiterhin ist es vorgesehen, dass die Drehvorrichtung 10, insbesondere der Drehteller 11, scheiben- oder ringscheibenförmig ausgestaltet ist, wobei sich die scheiben- oder ringscheibenförmig ausgestaltete Drehvorrichtung im Wesentlichen senkrecht zur Drehachse D erstreckt. Insbesondere bevorzugt ist es vorgesehen, dass im montierten Zustand des Systems ein erster Teil der Leitungen 3' oberhalb der Drehvorrichtung 10 und ein zweiter Teil der Leitungen 3" unterhalb der Drehvorrichtung 10 angeordnet sind bzw. der erste Teil der Leitungen 3' ist oberhalb des Fahrzeugrahmens und die zweite Teil der Leitungen 3" unterhalb des Fahrzeugrahmens angeordnet. Unter "oberhalb" ist insbesondere die der Fahrbahn abgewandten Seite vom Fahrzeugrahmen und unter "unterhalb" die der Fahrbahn zugwandten Seite des Fahrzeugrahmens zu verstehen. Dabei ist der zweite Teil der Leitungen 3" zusammen mit der Kopplungskomponente 12 unterhalb der Drehvorrichtung 10 angeordnet und bevorzugt mit der Kopplungskomponente 2 verbunden. Vorzugsweise ist die Kopplungskomponente 2 in einem segmentförmigen Anschlussbereich an der Unterseite des Drehtellers 11 der Drehvorrichtung 10 kraft-, reib- und/oder stoffschlüssig angebunden. Um die Leitungen 3 sowohl oberhalb als auch unterhalb der Drehvorrichtung 10 zu führen, ist eine Öffnung 21 im Drehteller 11 vorgesehen, durch die die Leitungen durchgeführt werden. D. h. über die Öffnung 31 geht der erste Teil der Leitungen 3' in den zweiten Teil der Leitungen 3" über.

Durch die Schwenkbewegung der Kopplungskomponente 2 ist es erforderlich, dass die Leitungen 3 derart gestaltet sind, dass sie die Bewegungsfreiheit der Kopplungskomponente 2 nicht einschränken bzw. nicht durch die Schwenkbewegungen auf Dauer beschädigt werden. Hierzu ist es vorgesehen, dass das System 1 derart konfiguriert ist, dass die Leitungen 3, insbesondere der erste Teil der Leitungen 3', in der Primärlage eine Schlaufe bilden und die Schlaufe beim Überführen in die Sekundärlage verkleinert wird, vorzugsweise ohne zu verschwinden. D. h. bevorzugt ist die Leitung 3 derart dimensioniert, dass sie sowohl in der Primärlage als auch in der Sekundärlage spannungsfrei bleibt. Dadurch wird der Leitung 3 mit Vorteil die Möglichkeit gegeben, einer Schwenkbewegung der Kopplungskomponente zu folgen, ohne dass die Leitung 3 überstreckt werden muss oder die Bewegungsfreiheit der Kopplungskomponente 2 beim Schwenken eingeschränkt wird.

Weiterhin ist es vorgesehen, dass in der Öffnung 21 oder in einem an die Öffnung 21 angrenzenden Bereich eine Befestigungsvorrichtung 34 und/oder ein Klemmbereich KB vorgesehen ist, mit dem die Leitungen 3 fixierbar sind. Vorzugsweise wird jede einzelne der Leitungen 3 mit dem Befestigungsmechanismus fixiert. Dadurch wird mit Vorteil sichergestellt, dass eine Länge des zweiten Teils der Leitungen 3' unterhalb der Drehvorrichtung 10 auch bei Schwenkbewegung im Wesentlichen konstant bleibt. Beispielsweise erfolgt die Schlaufenbildung ausschließlich oberhalb der Drehvorrichtung 10. Insbesondere wird dadurch die Ausbildung bzw. Rückbildung der Schlaufe auf den ersten Teil der Leitungen 1' oberhalb der Drehvorrichtung 10 beschränkt, d. h. es wird durch die Befestigungsvorrichtung 34 die Ausbildung der Schlaufe in einem gezielten Bereich unterstützt. Vorzugsweise ist die Öffnung 21 bei Einnahme der Primärlage in Fahrtrichtung F gesehen hinter dem Zapfenelement auf der Mittelachse des Sattelaufliegers angeordnet. Weiterhin ist eine Begrenzung 23 vorstellbar, die verhindert, dass sich die Schlaufe in der Primärlage in einem Bereich von der Drehachse aus gesehen hinter der Öffnung 21 ausbildet.

Weiterhin ist es vorgesehen, dass in einer parallel zur Drehachse D, insbesondere konzentrisch zur Drehachse, verlaufenden Richtung ein Kragenelement 18 vom scheibenförmigen drehbaren Teil der Drehvorrichtung 10, insbesondere im montierten Zustand an der Oberseite des drehbaren Teils, absteht. Dieses Kragenelement ist ein Teil einer Kabelführung 16 bzw. dient mit Vorteil zur Kabelführung 16, insbesondere gebogenen Kabelführung 16. Dabei weist das Kragenelement 18 einen geöffneten bzw. unterbrochenen Bogenbereich 22 auf, insbesondere auf der der Öffnung 21 zugewandten Seite. Vorzugsweise nimmt ein Verhältnis des unterbrochenen Bogenbereichs 22 zu einem gedachten, vollständig geschlossenen Kragenelement 18 einen Wert zwischen 0,1 und 0,4, bevorzugt zwischen 0,15 und 0,35 und besonders bevorzugt zwischen 0,22 und 0,28 an.

Darüber hinaus lässt sich dem Kragenelement 18 ein Krümmungsradius A2 bezüglich der Drehachse D zuordnen. Dabei ist es vorgesehen, dass ein Verhältnis zwischen einem Abstand A1 der Öffnung 21 zur Drehachse D1 zum Krümmungsradius A1 einen Wert zwischen 0,7 und 1,1, bevorzugt zwischen 0,8 und 1,05 und besonders bevorzugt zwischen 0,88 und 0,98 annimmt. Insbesondere bei einem Verhältnis zwischen 0,88 und 0,98 ist die Öffnung in radialer Richtung (von der Drehachse aus) gesehen gegenüber dem Kragenelement 18 leicht zurückversetzt angeordnet.

Weiterhin ist es vorgesehen, dass in einer parallel zur Drehachse D verlaufenden Richtung das Kragenelement 18 an seinem im montierten Zustand oberen Ende eine Bordüre aufweist. Dadurch wird eine zur Seite hin offene C-förmige Kabelführung 16 bereitgestellt, in der die Leitung 3 geführt werden kann.

Vorzugsweise umfasst das System 1 über ein Federelement 40 und/oder ein Federensemble, mit dem die Kopplungskomponente 2 von der Sekundärlage in die Primärlage zurückgeführt wird. Beispielsweise handelt es sich um eine Torsionsfeder, Druckfeder und/oder eine Zugfeder. Dadurch lässt sich mit Vorteil die Drehvorrichtung automatisch von der Sekundärlage in die Primärlage zurückführen.

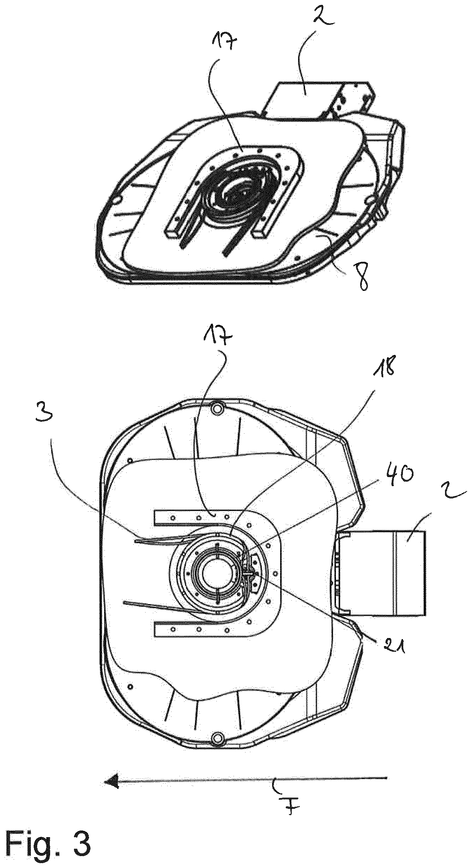

In den Figuren 3 bis 5 ist das System 1 zusammen mit einer sattelzugseitigen Sattelkupplung 8 dargestellt. Neben dem Kragenelement 18 dient hierbei zur Bildung eines Kabelkanals, insbesondere zu dessen Begrenzung, ein Gehäuse 17. Das Gehäuse 17 ist vorzugsweis starr mit dem Fahrzeugrahmen bzw. der Bodenplatte 5 verbunden und umgibt das Zapfenelement. Hierbei ist eine dem Zapfenelement zugewandte Seite im Wesentlichen U-förmig ausgestaltet, wobei die offene Seite des U-förmigen Gehäuses 17 in Fahrrichtung gesehen nach vorne zeigt. Die im Wesentlichen parallel zur Mittelachse verlaufenden Schenkel des U-förmigen Verlaufs enden dabei in Fahrtrichtung F gesehen vor dem Zapfenelement bzw. vor der für das Zapfenelement vorgesehenen Aussparung 24. Insbesondere wird durch die Dimensionierung des Gehäuses 17 ein Querschnitt des Kabelkanals 14 festgelegt, der oberhalb des Drehtellers 11 bzw. der Drehvorrichtung 10 ausgestaltet ist. Vorzugsweise nimmt ein Verhältnis zwischen einer bezogen auf die Drehachse D in radialer Richtung bemessene Breite B des Kabelkanals 14 zu einem Krümmungsradius A2 des Kragenelements 18 einen Wert zwischen 0,15 und 0,35, bevorzugt zwischen 0,18 und 0,28 und besonders bevorzugt zwischen 0,22 und 0,27 an. Weiterhin ist ein Deckelement 27 vorgesehen, das die Drehvorrichtung 10 oberhalb des Zapfenelements abschließt.
- 1: System
- 2: Kopplungskomponente
- 3: Leitung
- 3': erster Teil der Leitung
- 3": zweiter Teil der Leitung
- 8: Sattelkupplung
- 10: Drehvorrichtung
- 11: Drehteller
- 14: Kabelkanal
- 16: Kabelführung
- 17: Gehäuse
- 18: Kragenelement
- 21: Öffnung
- 23: Begrenzung
- 24: Aussparung
- 27: Deckelelement
- 31: Querstreben
- 32: Längsstreben
- 34: Befestigungsvorrichtung
- 52: Steckerkonsole
- 40: Federelement
- KB: Klemmbereich
- o: oberhalb
- u: unterhalb
- D: Drehachse
- F: Fahrrichtung
- A1: Abstand
- A2: Krümmungsradius

## Patentansprüche

1. System (1) zum Verschwenken einer Kopplungskomponente (2), insbesondere eines Auslegers, für eine Kopplung zwischen einer Sattelzugmaschine (11) und einem Sattelauflieger (12) umfassend
- eine Drehvorrichtung (10), mittels der die Kopplungskomponente (2) zwischen einer Primärlage und einer Sekundärlage verschwenkbar ist und
- mindestens eine Leitung (3), die über die Drehvorrichtung (10) in die Kopplungskomponente (2) geführt wird,
wobei die Leitung (3) durch eine Öffnung (21) in der Drehvorrichtung (10) geführt wird,
wobei die Drehvorrichtung (10) eine Kabelführung (16) zur Führung der Leitung (3) umfasst,
wobei ein von der Drehvorrichtung (10) abstehendes Kragenelement (18) einen Teil der Kabelführung (16) bildet, **dadurch gekennzeichnet, dass** das Kragenelement (18) an einer der Öffnung (21) zugewandten Seite unterbrochen ist oder eine Einbuchtung aufweist,
wobei das System (1) derart konfiguriert ist, dass die Leitung (3) in der Primärlage in einem festgelegten Bereich eine Schlaufe ausbildet, und die Schlaufe beim Verschwenken in die Sekundärlage verkleinert wird.

2. System (1) gemäß Anspruch 1,
wobei die Leitung (3), insbesondere in ihrer Länge, derart dimensioniert ist, dass sie ohne zu überspannen führbar ist, wenn eine vorgesehene maximale Auslenkung in der Sekundärlage eingenommen wird.

3. System (1) gemäß einem der vorhergehenden Ansprüche,
wobei die Drehvorrichtung (10) einen Kabelkanal (14) zur Führung der Leitung (3) umfasst.

4. System (1) gemäß einem der vorhergehenden Ansprüche, wobei
- das von der Drehvorrichtung (10) abstehende Kragenelement (18), insbesondere auf einer der Drehachse (D) zugewandten Seite, und
- ein Gehäuse (17) oberhalb (o) der Drehvorrichtung (10) einen Teil der Kabelführung (16) und/oder des Kabelkanals (14) bildet.

5. System (1) gemäß einem der vorhergehenden Ansprüche,
wobei ein Verhältnis zwischen einem unterbrochenen Bogenbereich (22) zu einem gedachten Gesamtumfang eines geschlossenen Kragenelements (18) einen Wert zwischen 0,1 und 0,4, bevorzugt zwischen 0,15 und 0,35 und besonders bevorzugt zwischen 0,22 und 0,28 annimmt.

6. System (1) gemäß einem der vorhergehenden Ansprüche,
wobei das System (1) derart konfiguriert ist, dass sich die Schlaufe oberhalb (o) der Drehvorrichtung (10), insbesondere in Richtung der Drehachse (D) gesehen auf Höhe der Kabelführung (16) oder des Kabelkanals (14), ausbildet, wobei sich vorzugsweise die Schlaufe im Kabelkanal (14) und/oder außerhalb des Kabelkanals (14) ausbildet.

7. System (1) gemäß Anspruch 6,
wobei ein Verhältnis eines Abstands (A1) der Öffnung (21) zur Drehachse (D) zu einem Abstand (A2) der Kabelführung (16) zur Drehachse (D) einen Wert zwischen 0,75 und 1,15, bevorzugt zwischen 0,8 und 1 und besonders bevorzugt zwischen 0,88 und 0,98 annimmt.

8. System (1) gemäß Anspruch 7,
wobei die Drehvorrichtung (10) in der Öffnung (1) oder in einem an die Öffnung (21) angrenzenden Bereich einen Klemmbereich (KB) zum Fixieren der Leitung (3) und/oder eine Struktur (23) zum Führen der Leitung (3) aufweist.

9. System (1) gemäß einem der Ansprüche 7 oder 8,
wobei die Öffnung (21) in einer parallel zur Drehachse (D) verlaufenden Richtung oberhalb der Kopplungskomponente (2) angeordnet ist.

10. System (1) gemäß einem der vorhergehenden Ansprüche,
wobei ein Verhältnis zwischen einer bezogen auf die Drehachse (D) in radialer Richtung bemessenen Breite (B) des Kabelkanals zu einem Abstand (A2) der Kabelführung (16) einen Wert zwischen 0,15 und 0,35, bevorzugt zwischen 0,18 und 0,28 und besonders bevorzugt zwischen 0,22 und 0,27 annimmt.

11. System (1) gemäß einem der vorhergehenden Ansprüche,
wobei die Drehvorrichtung (10) ein Federelement (40) für eine automatische Rückkehr in die Primärlage aufweist.

12. Verfahren zum Verschwenken einer Kopplungskomponente (2), insbesondere eines Auslegers, für eine Kopplung zwischen einer Sattelzugmaschine (11) und einem Sattelauflieger (12),
wobei eine Drehvorrichtung (10), mittels der die Kopplungskomponente (2) zwischen einer Primärlage und einer Sekundärlage verschwenkbar ist, und mindestens eine Leitung (3), die über die Drehvorrichtung (10) in die Kopplungskomponente (2) geführt wird, vorgesehen sind,
wobei die Leitung (3) durch eine Öffnung (21) in der Drehvorrichtung (10) geführt wird,
wobei die Drehvorrichtung (10) eine Kabelführung (16) zur Führung der Leitung (3) umfasst,
wobei ein von der Drehvorrichtung (10) abstehendes Kragenelement (18) einen Teil der Kabelführung (16) bildet,
dadurch, dass das Kragenelement (18) an einer der Öffnung (21) zugewandten Seite unterbrochen ist oder eine Einbuchtung aufweist,
wobei die Leitung (3) in der Primärlage in einem festgelegten Bereich eine Schlaufe ausbildet, und die Schlaufe beim Verschwenken in die Sekundärlage verkleinert wird.

## Claims

1. A system (1) for pivoting a coupling component (2), in particular an outrigger, for a coupling between a tractor unit (11) and a semitrailer (12), comprising
- a rotation device (10) by means of which the coupling component (2) can be pivoted between a primary position and a secondary position and
- at least one line (3), which is guided via the rotation device (10) into the coupling component (2),
wherein the line (3) is guided through an opening (21) in the rotation device (10),
wherein the rotation device (10) comprises a cable guide (16) for guiding the line (3),
wherein a collar element (18) projecting from the rotation device (10) forms part of the cable guide (16),
**characterized in**
**that** the collar element (18) is interrupted on a side facing the opening (21) or has an indentation,
wherein the system (1) is configured such that the line (3) forms a loop in the primary position in a defined area, and the loop is reduced in size when pivoted to the secondary position.

2. The system (1) according to claim 1,
wherein the line (3), in particular in its length, is dimensioned such that it can be guided without overstretching when an intended maximum deflection is assumed in the secondary position.

3. The system (1) according to one of the preceding claims,
wherein the rotation device (10) comprises a cable channel (14) for guiding the line (3).

4. The system (1) according to one of the preceding claims, wherein
- the collar element (18) projecting from the rotation device (10), in particular on a side facing the axis of rotation (D), and
- a housing (17) above (o) the rotation device (10) forms part of the cable guide (16) and/or the cable channel (14).

5. The system (1) according to one of the preceding claims,
wherein a ratio between an interrupted arc area (22) to an imaginary total circumference of a closed collar element (18) assumes a value between 0.1 and 0.4, preferably between 0.15 and 0.35 and more preferably between 0.22 and 0.28.

6. The system (1) according to one of the preceding claims,
wherein the system (1) is configured in such a way that the loop forms above (o) the rotation device (10), in particular at the level of the cable guide (16) or the cable channel (14) when viewed in the direction of the axis of rotation (D), wherein preferably the loop forms in the cable channel (14) and/or outside the cable channel (14).

7. The system (1) according to claim 6,
wherein a ratio of a distance (A1) of the opening (21) to the axis of rotation (D) to a distance (A2) of the cable guide (16) to the axis of rotation (D) assumes a value between 0.75 and 1.15, preferably between 0.8 and 1 and particularly preferably between 0.88 and 0.98.

8. The system (1) according to claim 7,
wherein the rotation device (10) has in the opening (1) or in a region adjacent to the opening (21) a clamping region (KB) for fixing the line (3) and/or a structure (23) for guiding the line (3).

9. The system (1) according to one of claims 7 or 8,
wherein the opening (21) is arranged above the coupling component (2) in a direction parallel to the axis of rotation (D).

10. The system (1) according to one of the preceding claims,
wherein a ratio between a width (B) of the cable channel dimensioned in the radial direction relative to the axis of rotation (D) and a distance (A2) of the cable guide (16) assumes a value between 0.15 and 0.35, preferably between 0.18 and 0.28 and more preferably between 0.22 and 0.27.

11. The system (1) according to one of the preceding claims,
wherein the rotation device (10) comprises a spring element (40) for automatic return to the primary position.

12. A method for pivoting a coupling component (2), in particular an outrigger, for a coupling between a tractor unit (11) and a semitrailer (12),
wherein a rotation device (10), by means of which the coupling component (2) can be pivoted between a primary position and a secondary position, and at least one line (3), which is guided into the coupling component (2) via the rotation device (10), are provided,
wherein the line (3) is guided through an opening (21) in the rotation device (10),
wherein the rotation device (10) comprises a cable guide (16) for guiding the line (3),
wherein a collar element (18) projecting from the rotation device (10) forms part of the cable guide (16),
in that the collar element (18) is interrupted on a side facing the opening (21) or has an indentation,
wherein the line (3) forms a loop in the primary position in a defined region, and the loop is reduced in size when pivoted into the secondary position.

## Revendications

1. Système (1) pour faire pivoter un composant d'attelage (2), en particulier un bras, pour l'attelage entre un véhicule tracteur (11) et une semi-remorque (12), comprenant
- un dispositif de rotation (10) permettant de faire pivoter le composant d'attelage (2) entre une position primaire et une position secondaire, et
- au moins une conduite ou ligne (3) qui est menée jusque dans le composant d'attelage (2) par l'intermédiaire du dispositif de rotation (10), dans lequel
la conduite ou ligne (3) est menée à travers une ouverture (21) dans le dispositif de rotation (10),
le dispositif de rotation (10) comprend un guide-câble (16) pour guider la conduite ou ligne (3),
un élément formant collerette (18) faisant saillie du dispositif de rotation (10) constitue une partie du guide-câble (16),
**caractérisé en ce que**
sur un côté tourné vers l'ouverture (21), l'élément formant collerette (18) est interrompu ou présente une cavité,
le système (1) est configuré de telle sorte que dans la position primaire, la conduite ou ligne (3) forme une boucle dans une zone définie, et la boucle est réduite en taille lors du pivotement jusque dans la position secondaire.

2. Système (1) selon la revendication 1,
dans lequel la conduite ou ligne (3) est dimensionnée, en particulier quant à sa longueur, de manière à pouvoir être guidée sans s'étirer excessivement lorsqu'un débattement maximal déterminé est pris dans la position secondaire.

3. Système (1) selon l'une des revendications précédentes,
dans lequel le dispositif de rotation (10) comprend un canal à câble (14) pour guider la conduite ou ligne (3).

4. Système (1) selon l'une des revendications précédentes,
dans lequel
- l'élément formant collerette (18) faisant saillie du dispositif de rotation (10), en particulier sur un côté tourné vers l'axe de rotation (D), et
- un boîtier (17) au-dessus (o) du dispositif de rotation (10) constituent une partie du guide-câble (16) et/ou du canal à câble (14).

5. Système (1) selon l'une des revendications précédentes,
dans lequel un rapport entre une zone arquée interrompue (22) et une circonférence totale imaginaire d'un élément formant collerette fermé (18) prend une valeur comprise entre 0,1 et 0,4, de préférence entre 0,15 et 0,35, et de manière particulièrement préférée entre 0,22 et 0,28.

6. Système (1) selon l'une des revendications précédentes,
dans lequel le système (1) est configuré de telle sorte que la boucle se forme au-dessus (o) du dispositif de rotation (10), en particulier à la hauteur du guide-câble (16) ou du canal à câble (14), vu dans la direction de l'axe de rotation (D), et
de préférence, la boucle se forme dans le canal à câble (14) et/ou à l'extérieur du canal à câble (14).

7. Système (1) selon la revendication 6,
dans lequel le rapport d'une distance (A1) de l'ouverture (21) par rapport à l'axe de rotation (D) sur une distance (A2) du guide-câble (16) par rapport à l'axe de rotation (D) prend une valeur comprise entre 0,75 et 1,15, de préférence entre 0,8 et 1 et de manière particulièrement préférée entre 0,88 et 0,98.

8. Système (1) selon la revendication 7,
dans lequel le dispositif de rotation (10) comprend, dans l'ouverture (1) ou dans une zone adjacente à l'ouverture (21), une zone de serrage (KB) pour fixer la conduite ou ligne (3) et/ou une structure (23) pour guider la conduite ou ligne (3).

9. Système (1) selon l'une des revendications 7 ou 8,
dans lequel l'ouverture (21) est disposée au-dessus du composant d'attelage (2) dans une direction parallèle à l'axe de rotation (D).

10. Système (1) selon l'une des revendications précédentes,
dans lequel un rapport entre une largeur (B) du canal à câble, dimensionnée dans la direction radiale par rapport à l'axe de rotation (D), et une distance (A2) du guide-câble (16) prend une valeur comprise entre 0,15 et 0,35, de préférence entre 0,18 et 0,28 et de manière particulièrement préférée entre 0,22 et 0,27.

11. Système (1) selon l'une des revendications précédentes,
dans lequel le dispositif de rotation (10) comprend un élément de ressort (40) pour un retour automatique à la position primaire.

12. Procédé pour faire pivoter un composant d'attelage (2), en particulier un bras, pour un attelage entre un véhicule tracteur (11) et une semi-remorque (12),
dans lequel est prévu un dispositif de rotation (10) permettant de faire pivoter le composant d'attelage (2) entre une position primaire et une position secondaire, et au moins une conduite ou ligne (3) qui est menée jusque dans le composant d'attelage (2) par l'intermédiaire du dispositif de rotation (10),
la conduite ou ligne (3) est menée à travers une ouverture (21) dans le dispositif de rotation (10),
le dispositif de rotation (10) comprend un guide-câble (16) pour guider la conduite ou ligne (3),
un élément formant collerette (18) faisant saillie du dispositif de rotation (10) constitue une partie du guide-câble (16),
**caractérisé en ce que**
sur un côté tourné vers l'ouverture (21), l'élément formant collerette (18) est interrompu ou présente une cavité,
dans la position primaire, la conduite ou ligne (3) forme une boucle dans une zone définie, et la boucle est réduite en taille lors du pivotement jusque dans la position secondaire.
